# EUROPEAN PATENT SPECIFICATION

(11) **EP 2 221 486 B1**
(45) Date of publication and mention of the grant of the patent: **18.06.2014**
(21) Application number: 10001182.4
(22) Date of filing: 05.02.2010
(51) Int. Cl.: F04D 17/16, F04D 29/42, F04D 29/58, F04D 25/08, F04D 29/28, B08B 15/00, F24C 15/20, H02K 5/10

(54) **Impeller for fans**
Lüfterrad
Roue de ventilateur

(30) Priority: 19.02.2009 IT MI20090048 U
(43) Date of publication of application: 25.08.2010
(73) Proprietor: Faber S.p.A., 60044 Fabriano (Ancona) (IT)
(72) Inventor:
(74) Representative: Lemcke, Brommer & Partner Patentanwälte Partnerschaft mbB

(56) References cited:
- CN-A- 1 208 822
- US-A- 2 798 659

## Description

The present invention relates to fan impellers, in particular for kitchen hoods.

These particular impellers are known as drum impellers and are enclosed within a spiral shaped enclosure, terminating in an exit opening or diffuser. Such impellers are known, e.g. from US 2798659 A1 or CN 1208822A. These impellers comprise a series of peripheral blades parallel to the impeller axis, which are angularly equidistant and have an arcuate cross-section to facilitate lateral exit of the air flow, which is drawn through the peripheral part of both the impeller bases.

The blades are joined together both along the perimeter of each of the two bases by means of a relative ring, and on the central plane of the impeller by a central disc. The disc divides the impeller into two equal symmetrical parts and is keyed onto the shaft of an electric motor by which the impeller can be made to rotate about its axis. The motor is therefore located on one side of said disc and is contained within one half of the impeller.

For safety reasons, user accessibility through said diffuser to the internal region of the impeller blades must be avoided to prevent the user from touching electrically live regions with long tools and objects, resulting in serious danger to the user or component damage. It should be noted that although the space between the blades is small, the fact that they are made as thin as possible for fluid-dynamics reasons, they are easily deformed if a tool, an object or the fingers of the hand are forced between them, so that the danger of reaching electrically live regions still exists.

It is also undesirable for any particles suspended in the air flow entering the fan to deposit on the interior of the electric motor or on the drive shaft.

The solutions used up to the present time to overcome at least some of said drawbacks are essentially of two types. A first solution, which provides a certain protection for the live regions of the electric motor, consists of positioning said disc as close as possible to the motor, so that the disc is normally substantially offset from the central impeller plane. As the disc divides the interior volume of the impeller into two parts, this solution (in which the two parts do not have the same volume) not only does not ensure complete protection of the live regions, but does not prevent the user from reaching the motor with a long object inserted through the diffuser opening and between the blades, so possibly deforming them.

Another serous drawback of this solution is that as the disc is disposed non-symmetrically about the central plane of the impeller, the air flow peripherally leaving that impeller portion in which the motor is positioned (which is the smaller volume portion) can be decidedly less than the air flow peripherally leaving the remaining portion of the impeller (which is the greater volume portion).

Another available solution is to eliminate the intermediate disc, which is replaced by a peripheral transverse circular ring disposed close to that impeller base closer to the motor. To this ring, which is fixed to the blades, there is fixed the lower edge of a coaxial dome which encloses the motor except for that side at the relative impeller base. With this solution the live motor regions, and more generally the motor itself, are protected effectively. However the said circular ring prevents air entry into the impeller from the peripheral side of the relative base. The result is that the air flow leaving the diffuser is decidedly non-uniform because of the lack of air entry on the motor side.

An object of the present invention is to provide an impeller which does not present the aforesaid drawbacks of known impellers of this type.

This object is attained by the impeller of the following invention, comprising a central disc rigid with the impeller blades, the disc dividing the impeller into two equal symmetrical portions and being coaxially keyed onto an electric motor shaft which drives the impeller and is contained in one of the two portions of this latter, characterised by being provided with an annular baffle extending from and rigid with the disc, and laterally surrounding the motor.

It will be apparent that the proposed solution enables effective protection to be very simply applied not only to the live regions of the motor but also to the motor overall, in addition to achieving a uniform exit air flow, as this solution does not prevent air entry into the impeller from the peripheral part at that impeller base close to the motor, while effectively protecting the motor from deposition of particles carried in suspension by the air flow into the fan.

The invention will be more apparent from the ensuing description of one embodiment thereof, given by way of example, with reference to the accompanying drawings, in which:
Figure 1 is a cross-section through a fan using an impeller of the present invention, the section being taken on a plane offset from the central disc thereof, in order to involve that impeller portion in which the motor is not present;
Figure 2 is a section therethrough on the line 2-2 of Figure 1;
Figure 3 is a perspective view showing just the impeller of the invention, the view being taken from that side comprising said annular protection baffle;
Figure 4 is a perspective view taken from another viewpoint, showing the same impeller but from which one half has been removed in order to more easily understand its construction.

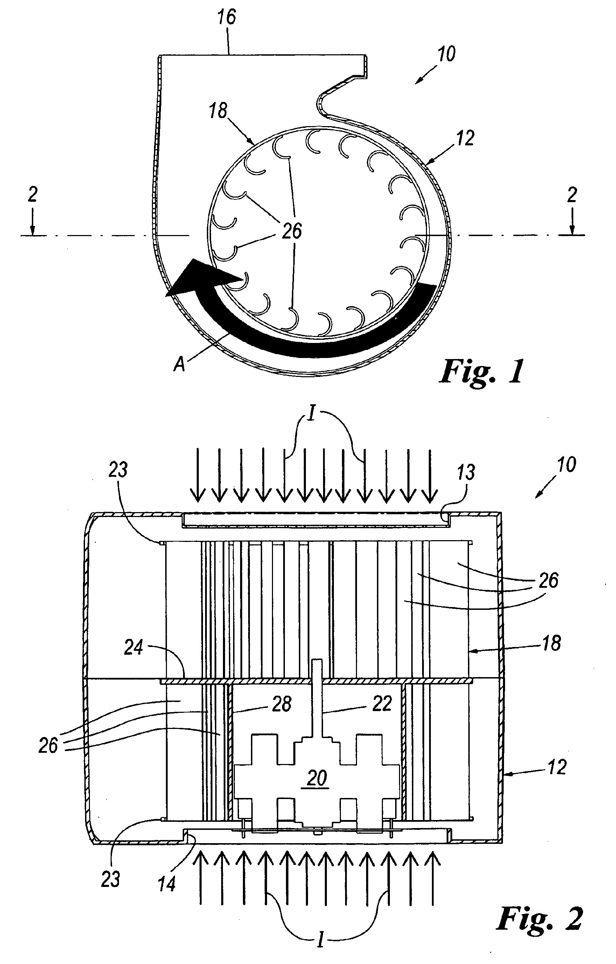

From Figures 1 and 2 it can be seen that a fan 10, of the type used for kitchen hoods, comprises a spirally extending enclosure 12 provided with two coaxial opposing openings 13 and 14 (Figure 2) for air entry (as indicated by the arrows I of Figure 2), and an exit opening or diffuser 16 (Figure 1) from which the air flow leaves.

The fan 10 also comprises an impeller 18 of the so-called drum type, rotatable about its axis and provided with a series of angularly equidistant blades 26 of arcuate cross-section in the illustrated example. The impeller 18 is keyed onto the shaft 22 of an electric motor 20 (Figure 2) carried by the enclosure 12. The blades 26 are fixed at their two ends to two relative rings 23 and to a central circular disc 24. In addition to indicating the direction of rotation of the impeller 18, the arrow A of Figure 1 also indicates how the air flow leaving the impeller 18 moves within the enclosure 12, while the arrows U (Figure 1) indicate the two half-flows which form the flow A.

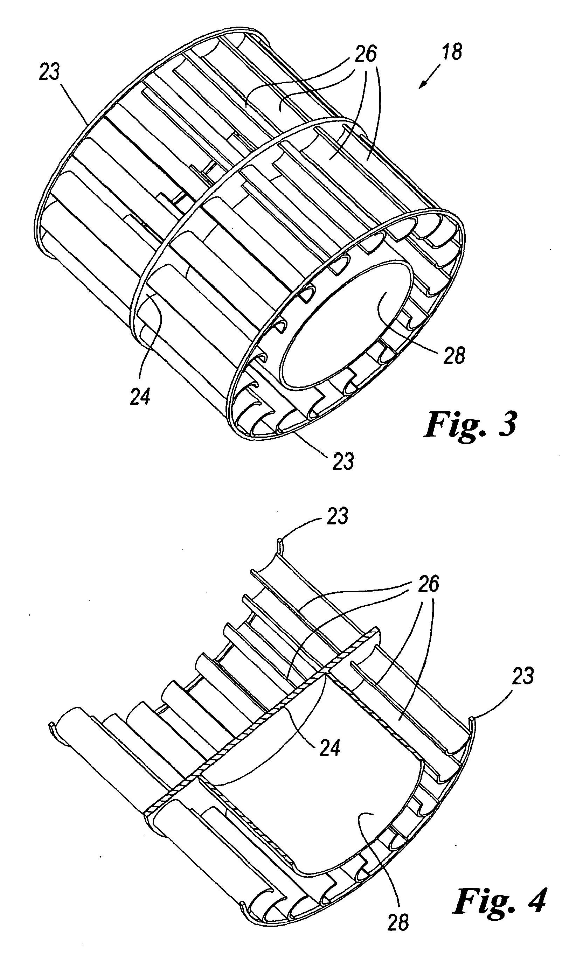

As best seen from Figures 3 and 4, the circular disc 24 divides the impeller 18 into two equal symmetrical portions. It can also be seen that an annular protection baffle 28 (circular in the example, of circular directrix) is provided, fixed to the disc 24, in that part of the impeller 18 in which the electric motor 20 is present. The baffle 28, together with the disc 24, prevent the user from being able to touch (by using a tool such as a screwdriver or any elongate object which can be inserted between the blades 26, optionally by deforming same, via the exit opening 16) either the live region of the motor 20, or any part of this latter.

From Figure 2 it is possible to understand that the air flow I entering through each of the two opposing gridded entry openings 14 is identical (noting that draw-in takes place along the peripheral circular ring portion of these openings), and that the two half-flows of exit air are also equal, so that there is a substantially uniform total exit flow. It is also apparent that the protection offered by the disc 24 and the baffle 28 substantially prevents deposition on the motor 20 and on its shaft 22, of dust particles suspended in the air.

## Claims

1. An impeller (18) of drum type for fans (10), comprising a central disc (24) rigid with the blades (26) of the impeller (18), the disc (24) dividing the impeller (18) into two equal symmetrical portions and being coaxially keyed onto a shaft (22) of an electric motor (20) which drives the impeller (18) and is contained in one of the two portions of this latter (18), **characterised by** being provided with an annular baffle (28) extending from and rigid with the disc (24), and laterally surrounding the motor (20).

2. An impeller (18) as claimed in claim 1, wherein the annular baffle (28) is cylindrical and is of circular directrix.

## Patentansprüche

1. Laufrad (18) eines Trommeltyps für Lüfter (10), umfassend eine mittige Scheibe (24), die mit den Schaufeln (26) des Laufrads (18) steif verbunden ist, wobei die Scheibe (24) das Laufrad (18) in zwei gleiche symmetrische Teile aufteilt und über eine Keilverbindung koaxial auf einer Welle (22) eines Elektromotors (20) sitzt, der das Laufrad (18) antreibt und in einem der beiden Teile des Letzteren (18) enthalten ist, **dadurch gekennzeichnet, dass** er mit einer ringförmigen Schutzwand (28) ausgestattet ist, die sich von der Scheibe (24) aus erstreckt und mit dieser steif verbunden ist und den Motor (20) seitlich umgibt.

2. Laufrad (18) gemäß Anspruch 1, wobei die ringförmige Schutzwand (28) zylindrisch ist und eine kreisförmige Direktrix hat.

## Revendications

1. Roue à aubes (18) du type tambour pour des ventilateurs (10), comprenant un disque central (24) fixé de manière rigide aux aubes (26) de la roue à aubes (18), le disque (24) divisant la roue à aubes (18) en deux parties symétriques égales et étant claveté coaxialement sur un arbre (22) d'un moteur électrique (20) qui entraîne la roue à aubes (18) et est contenu dans l'une des deux parties de cette dernière (18), **caractérisée par** le fait d'être dotée d'un déflecteur annulaire (28) s'étendant à partir du disque (24) et fixé de manière rigide à celui-ci, et entourant latéralement le moteur (20).

2. Roue à aubes (18) selon la revendication 1, dans laquelle le déflecteur annulaire (28) est cylindrique et est à directrice circulaire.
